# DEMANDE DE BREVET EUROPEEN

(11) **EP 0 545 794 A1**
(43) Date de publication de la demande: **09.06.1993**
(21) Numéro de dépôt: 92403213.9
(22) Date de dépôt: 27.11.1992
(51) Int. Cl.: H02K 5/14, H02K 23/66

(54) **Machine électrodynamique à circuit électrique de service intégré**

(30) Priorité: 06.12.1991 FR 9115163
(71) Demandeur: VALEO SYSTEMES D'ESSUYAGE, 78180 Montigny-Le-Bretonneux (FR)
(72) Inventeur: Materne, Xavier, F-92120 Montrouge (FR); Dazat, Richard, F-92320 Chatillon (FR)
(74) Mandataire: Gamonal, Didier

(57) **Abrégé**

La présente invention concerne une machine électrodynamique. Dans un mode de réalisation elle concerne plus particulièrement un moteur à courant continu à collecteur, dont les porte-charbons (44,45) sont montés sur le circuit imprimé porteur du circuit électrique de service (5).

L'invention se caractérisé notamment en ce que la machine comporte une carcasse fermée par une pièce intermédiaire (6), en ce que le circuit électrique de service (5) est monté à l'intérieur de la pièce intermédiaire (6) dans un creux constitué par un rebord périphérique (33), tourné vers l'intérieur de la machine quand la pièce intermédiaire (6) est montée sur la carcasse.

## Description

La présente invention concerne une machine électrodynamique dont les enroulements inducteurs sont connectés à une source d'alimentation électrique ou à une charge électrique par un câble de liaison électrique.

Dans l'art antérieur, on a déjà proposé des solutions de montage de circuits électriques de service sur le carter ou la carcasse de la machine. Mais ces solutions posent des problèmes au montage notamment au sujet du positionnement des composants de la machine par rapport aux circuits électriques de service.

Dans un mode de réalisation préféré, la machine est dotée d'un collecteur monté sur un rotor qui porte des enroulements qu'il faut exciter (cas d'un moteur), ou aux bornes desquelles on recueille une force électromotrice induite (cas d'une génératrice). Le câble de liaison électrique est relié à des charbons montés dans des porte-charbons et en contact avec les lames conductrices du collecteur. Le positionnement relatif de ces pièces doit être précis et ceci entraîne un coût de fabrication.

Les méthodes de montage connues ne sont pas satisfaisantes et l'invention résoud ce problème de l'art antérieur.

Selon un autre aspect de l'invention, les charbons, qui sont des pièces d'usure, peuvent être changés. Mais dans l'art antérieur, il faut refaire un positionnement précis à nouveau lors du remontage. Cette opération est souvent trop difficile à envisager.

Pour résoudre les problèmes précités, la présente invention concerne une machine électrodynamique dont des enroulements sont connectés à une source d'énergie électrique ou à une charge au moyen d'un câble électrique de liaison, connecté sur des zones conductrices d'un circuit imprimé support d'un circuit électrique de service, fixe par rapport à une carcasse de la machine. L'invention se caractérise en ce que la carcasse est fixée par une pièce intermédiaire, en ce que le circuit électrique de service est monté à l'intérieur de la pièce intermédiaire dans un creux constitué par un rebord périphérique tourné vers l'intérieur de la machine quand la pièce intermédiaire est montée sur la carcasse.

Selon un autre aspect, l'invention concerne une machine qui comporte une pièce intermédiaire qui porte des jambes ou cales de fixation du circuit imprimé sur lequel est réalisé le circuit électrique de service destiné à gérer l'alimentation électrique de la machine.

Selon un autre aspect, l'invention concerne une machine électrodynamique à collecteur et charbons qui comporte des éléments de fixation d'étuis porte-charbons pratiqués sur le circuit imprimé.

Selon un autre aspect de l'invention, le circuit imprimé de la machine comporte un substrat isolant de forme circulaire percé d'un trou central destiné à laisser passer l'arbre et le collecteur du rotor, en ce que la périphérie extérieure du substrat comporte des encoches de guidage de la plaquette porte-charbons sur une pièce intermédiaire entre la carcasse et un socle de réducteur, ces encoches étant notamment réalisées par poinçonnage circulaire avec des angles non symétriques de façon à réaliser un détrompage lors du montage du circuit imprimé dans le moteur.

Selon un autre aspect de l'invention, la machine comporte des porte-charbons munis de languettes ou ergots destinés à pénétrer dans les trous correspondants de zones du substrat.

Selon un autre aspect de l'invention, la machine est telle que la pièce intermédiaire comporte notamment deux oreilles munies de perçages de liaison au socle du réducteur et les oreilles de la carcasse.

Selon un autre aspect de l'invention, la machine est telle que la pièce intermédiaire comporte des pions de centrage dont la partie supérieure comporte deux ergots destinés à pénétrer dans les encoches du substrat, de façon à permettre l'installation du substrat dans une position angulaire et à le faire venir en butée sur la surface de chaque pion.

D'autres caractéristiques et avantages de la présente invention seront mieux compris à l'aide de la description et des dessins annexés qui sont :
- la figure 1 : un schéma du rotor monté sur un circuit imprimé sur un socle d'une machine selon l'invention ;
- la figure 2 : une vue générale du rotor avant son montage sur le circuit imprimé ;
- la figure 3 : un détail de la fixation de l'organe de lecture dans une machine de l'invention ;
- la figure 4 : un détail d'un composant de la machine de la figure 3, permettant de réaliser une machine intégrale selon l'invention ;
- la figure 5 : la vue de dessus d'un composant de la machine de la figure 4 ;
- la figure 6 : une vue de montage en perspective d'un mode de réalisation d'un organe de lecture selon l'invention sur un composant de la machine de la figure 5 ;
- la figure 7 : un schéma de principe d'un système d'essuyage utilisant la machine de l'invention ;
- la figure 8 : une vue de montage en perspective d'une partie d'un groupe moto-réducteur d'essuyage mettant en oeuvre la machine de l'invention ;
- la figure 9 : une vue de montage en perspective partiellement éclatée d'un mode de réalisation d'une machine selon l'invention.

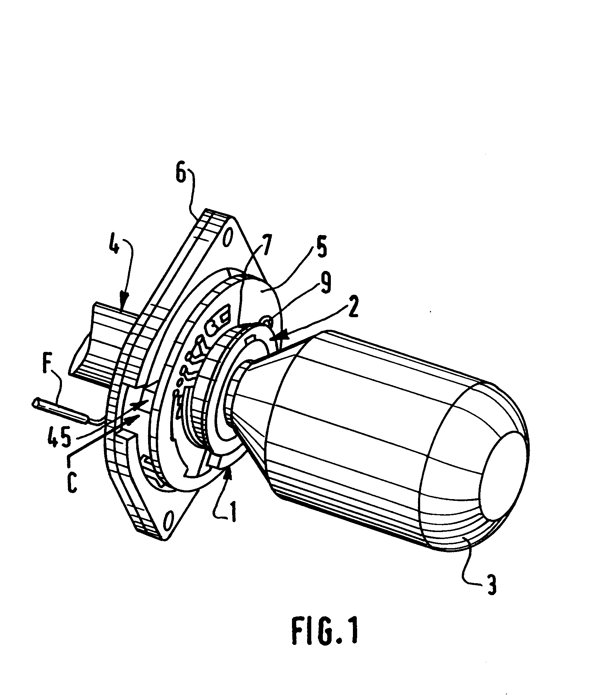

A la figure 1, on a représenté un schéma en perspective d'un rotor monté dans un circuit imprimé selon un mode de réalisation de l'invention. Le rotor comporte un bobinage d'induit 3 et un collecteur 7 montés sur un arbre de rotation 4.

Le collecteur 7 passe à travers un trou percé sur un circuit imprimé 5 qui supporte le circuit électrique de service qui sera décrit plus loin. Le circuit imprimé 5 est monté sur des pattes de support (non représentées) montées sur la face intérieure d'un socle 6 ou pièce intermédiaire qui sert à fermer la carcasse (141 à la figure 10) de la machine, et à réaliser sa fixation à un support ou à un autre organe comme un réducteur à engrenages.

A une extrémité du collecteur 7, est montée une roue 2 sur laquelle est portée une indication 9 de position angulaire. Cette indication peut être obtenue, notamment par inscription d'une marque lisible optiquement ou par enregistrement d'une information magnétique. Dans un mode de réalisation, cette indication est constituée par une indication ou marque unique 9. Sur le circuit imprimé 5 est monté un organe de lecture 1 de l'indication 9 inscrite ou enregistrée sur la roue 2. La nature de l'organe de lecture I dépend de la nature de l'indication (magnétique, optique, ou autre). Cette caractéristique de l'invention réside en ce que l'organe de lecture 1 est porté par le circuit imprimé 5.

La pièce intermédiaire 6 comporte au moins un dégagement ou lumière C à travers laquelle on a accès à au moins un porte-charbons 45, notamment à des fins de remplacement du charbon sans avoir à modifier le positionnement relatif du porte-charbons 45 et du collecteur 7. Enfin le circuit imprimé 5 comporte des borniers non référencés qui sont décrits plus loin et qui sont connectés par soudure, notamment aux extrémités de fil d'un câble F de liaison électrique.

Dans un exemple de réalisation préféré, l'indication est de nature magnétique. L'organe de lecture est alors constitué par un capteur à effet Hall dont la tension de sortie est modulée en fonction des variations du flux engendré par l'indication magnétique. Ainsi, on peut obtenir un signal de lecture en sortie de l'organe de lecture 1 qui soit à une première valeur (maximale par exemple) quand l'indication 9 est la plus proche de l'organe de lecture et à une seconde valeur (par exemple minimale) quand l'indication est à une distance diamétralement opposée par exemple.

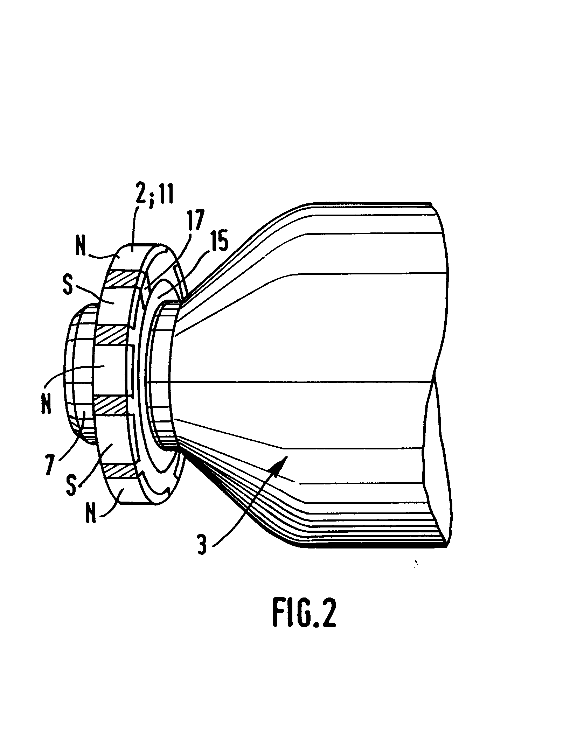

A la figure 2, on a représenté une vue partielle en perspective d'un mode de réalisation d'un rotor selon l'invention. La roue 2 ; 11 est constituée par un anneau cylindrique 11 montée sur une entretoise 15 et fixée en rotation par au moins une languette 17. L'anneau cylindrique porte une succession de pôles magnétiques N et S qui y sont inscrits ou insérés par des moyens connus.

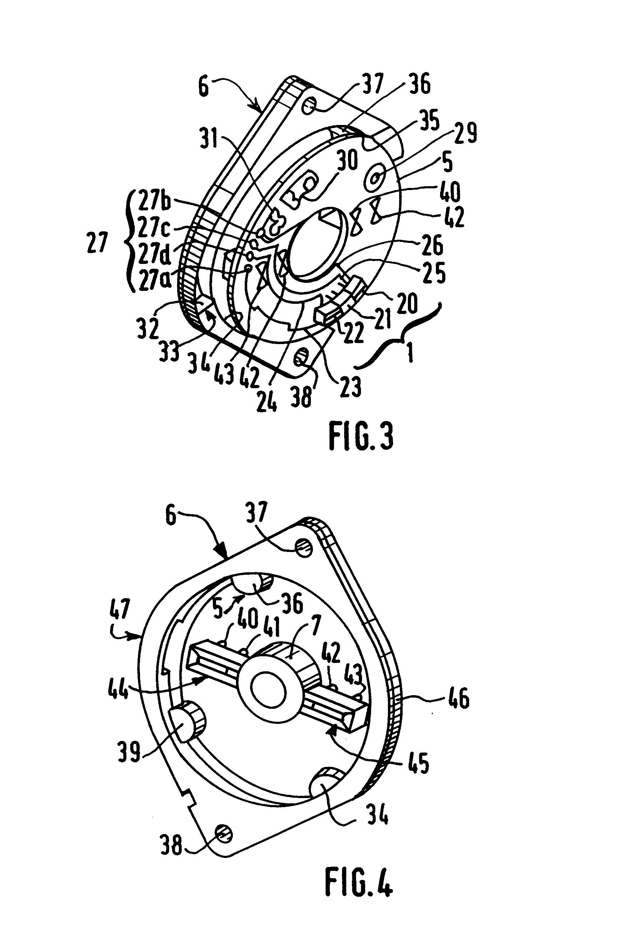

A la figure 3, on a représenté une vue de la pièce intermédiaire 6 équipée avant l'insertion du rotor. Le circuit imprimé 5 porte dans la partie inférieure au dessin un organe de lecture I constitué par deux capteurs à effet Hall 20,22, répartis par exemple à un intervalle angulaire de 10° l'un de l'autre. Les deux capteurs 20 et 22 sont insérés dans des logements d'un support 21 des capteurs qui permet leur fixation mécanique et leur orientation par rapport à l'organe tournant qui porte la marque magnétique précitée. De tels capteurs à effet Hall sont constitués par un boîtier semi-conducteur dont une face doit être disposée parallèlement à la variation de flux à détecter (face capteur à effet Hall). Chaque capteur comporte trois pattes d'accès électriques, de polarisation positive et de polarisation négative (masse) et de détection, respectivement.

La patte de polarisation positive de chaque capteur 20,22 est connectée à une piste 23 sur le circuit imprimé 5. Cette piste 23 débouche sur une zone conductrice 27a du circuit imprimé 5, sur laquelle est soudée une traverse non représentée. La traverse est constituée par un corps conducteur allongée comme une patte. Elle constitue un élément sur lequel on vient souder lors du montage du moteur, un fil correspondant d'un câble électrique de liaison de la machine.

De même, la patte de polarisation négative de chaque capteur est connectée à une piste 26 sur le circuit imprimé 5. Cette piste 26 débouche sur une zone conductrice 27b du circuit imprimé 5, sur laquelle est soudée une traverse non représentée. La traverse est constituée par un corps conducteur allongée comme une patte. Elle constitue un élément sur lequel on vient souder lors du montage du moteur, un fil correspondant d'un câble électrique de liaison de la machine.

La patte d'accès électrique de détection de chacun des deux capteurs à effet Hall 20,22 est reliée respectivement à une piste conductrice 24 ou 25 du circuit imprimé. Dans un mode de réalisation, ces deux pistes sont connectées respectivement à des zones conductrices 27c et 27d du circuit imprimé sur lesqelles sont disposées des traverses connectées à des fils corrrespondants du câble de liaison du moteur. De ce fait, la machine de l'invention peut être contrôlée et pilotée depuis l'extérieur, grâce aux signaux de détection transmis par les deux capteurs à effet Hall.

L'ensemble constitué des zones 27a, 27b, 27c et 27d et des traverses constitue une partie d'un bornier 27, qui constitue dans un mode de réalisation la première partie (par exemple, la partie mâle) d'un connecteur dont la seconde partie est portée par l'extrémité du câble électrique de liaison de la machine.

Dans un autre mode de réalisation, le circuit imprimé porte des composants (non représentés au dessin) qui permettent de traiter, sur le circuit électrique de service 5 lui même, les signaux de sortie des capteurs 20, 21, 22. Dans un mode de réalisation, le circuit de service 5 exécute localement l'interface Asservissement électronique (traitement) et machine.

L'alimentation électrique de la machine se fait au moyen des charbons et du câble de liaison qui comporte aussi des fils de connexion aux bobinages de la machine, non représentés, et qui parviennent respectivement sur les zones conductrices 3O et 31 depuis lesquelles sont soudés les fils d'extrémité (non représentés) des bobinages du stator (si le stator est bobiné) et/ou les fils de liaison aux charbons sur le collecteur de la machine (alimentation de la machine).

La pièce intermédiaire 6 comporte des oreilles sur lesquelles sont percés des trous 37 et 38 de fixation à un plat de la carcasse (non représentée) de la machine. Le circuit électrique de service 5 est monté à l'intérieur de la pièce intermédiaire 6 dans un creux constitué par un rebord périphérique 33. Ce creux est tourné vers l'intérieur de la machine quand la pièce intermédiaire est montée sur la carcasse. La pièce intermédiaire 6 porte des jambes ou cales de fixation 34 et 36 du circuit imprimé sur lequel est réalisé le circuit électrique de service 5 (voir nouveau plan).

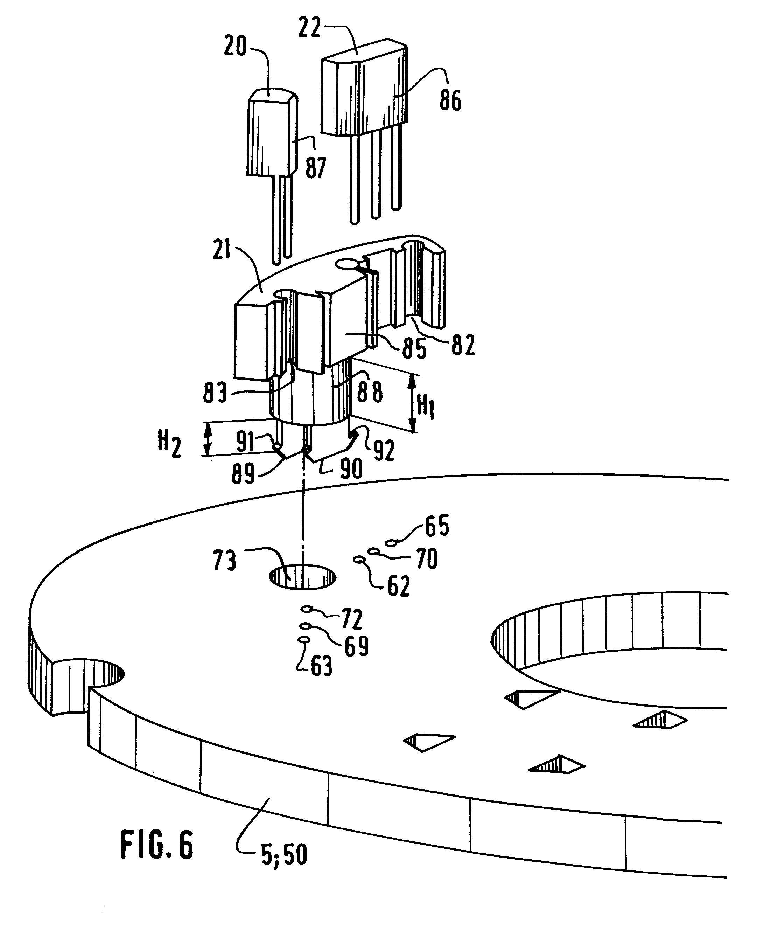

A la figure 4, des pattes de fixation 40 à 43 des étuis porte-charbons 44 et 45 sont insérées dans des trous du circuit imprimé 5 et sont visibles sur un côté à la figure 3 et visibles, du côté des étuis 44 et 45 à la figure 4 (voir plus loin figure 6).

A la figure 4, dans laquelle les mêmes éléments représentés que ceux des figures précédentes portent les mêmes numéros de référence, le collecteur 7 traverse un perçage dans le circuit imprimé 5 et un perçage dans le fond de la pièce intermédiaire. La pièce intermédiaire 6 est représentée installée sur la carcasse, celle-ci n'étant pas représentée.

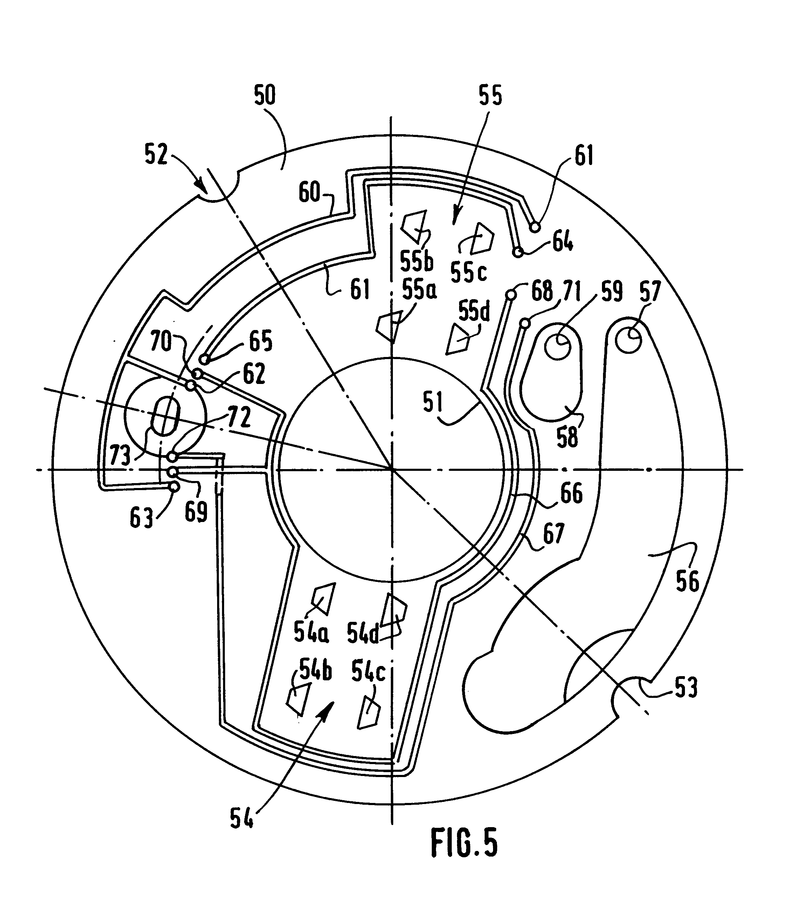

A la figure 5, on a représenté un mode de réalisation du circuit imprimé nu destiné à équiper la pièce intermédiaire 6 de la figure 2. Le circuit imprimé comporte un substrat isolant 50 de forme circulaire percé d'un trou central 51 destiné à laisser passer l'arbre et le collecteur du rotor. La périphérie extérieure du substrat 50 comporte deux encoches 52 et 53 de guidage de la plaquette porte-charbons sur la pièce intermédiaire. Ces encoches sont réalisées par poinçonnage circulaire avec des angles non symétriques de façon à réaliser un détrompage lors du montage du circuit imprimé dans le moteur.

D'autre part, le support 50 a été percé de deux zones 54 et 55 dans lesquelles on a réalisé des trous de fixation de forme trapézoïdale 54a à 54d et 55a à 55d, destinés à recevoir des pattes de fixation de chacun des deux porte-charbons sur la face non représentée aux dessins.

Le substrat 50 porte une première zone conductrice 56 destinée à l'alimentation du moteur. Cette zone conductrice 56 est percée d'un trou 57 destiné au passage d'une traverse de connexion. D'autre part, le substrat porte aussi une seconde zone conductrice 58 destinée à recevoir une connexion de masse électrique de puissance. Cette zone conductrice 58 est percée d'un trou 59 destiné au passage d'une traverse de connexion. Les zones conductrices 56 et 58 correspondent aux zones 30 et 31 de la figure 4 et constituent des moyens de connexion à l'alimentation de la machine.

Le substrat 50 porte ensuite des pistes 60 et 61 respectivement attribuées à la masse commune des capteurs à effet Hall et à la sortie d'information d'un premier capteur à effet Hall. La piste 60 relie une zone de connexion 61 d'extrémité de liaison, à deux zones respectivement 62 et 63 pour mettre à la masse respectivement le premier et le second capteur à effet Hall (non représentés). La piste conductrice 61 est reliée à une connexion 64 et à une connexion 65 sur laquelle la patte de sortie d'information du premier capteur à effet Hall est soudée.

Le substrat 50 porte aussi des pistes conductrices respectivement 66 et 67, d'alimentation des capteurs à effet Hall à un potentiel positif d'une part, et à une sortie d'information de capteur à effet Hall d'autre part. La piste 66 relie respectivement une connexion 68 à deux connexions respectivement 69 et 70 sur lesquelles sont fixées les pattes d'alimentation positive des deux capteurs à effet Hall. La piste 67 relie respectivement une zone de connexion 71 à une connexion 72 destinée à recevoir la patte correspondante du second capteur à effet Hall. L'ensemble des zones de connexion 61,64,69,70 correspond au bornier 27 décrit à la figure 3.

Le substrat isolant comporte entre les deux zones de connexion des deux capteurs à effet Hall, 65,70,62 d'une part, et 72,69,63 d'autre part, un trou de fixation 73 de forme oblongue destiné au passage d'une patte de fixation clipsable du support des deux capteurs à effet Hall.

A la figure 6, on a représenté un plan de montage des capteurs à effet Hall sur le circuit imprimé. Les deux capteurs à effet Hall 20 et 22 sont respectivement constitués par des boîtiers parallélépipèdiques, dont la face inférieure est traversée par trois pattes de connexion. Ces pattes sont destinées à pénétrer dans les trous 65,70,62 d'une part, et 72,69 et 63 déjà décrits à la figure 6. Avant cette introduction, les deux capteurs 20,22 sont introduits par glissement dans deux logements respectivement 82 et 83 d'un support 21. Le support 21 comporte une partie centrale 85 qui est destinée à fixer la distance entre les deux capteurs 20,22 d'une part et qui présente une courbure permettant d'orienter convenablement la face de détection respectivement 86 et 87 des capteurs 20 et 22 d'autre part.

D'autre part, le support 21 présente à sa partie inférieure une colonne 88 d'une hauteur H1 déterminée en fonction de la position finale d'implantation de la roue 2 ; 11 et de l'organe de lecture 1 ; 20-22. La colonne 88 présente une extrémité libre inférieure de hauteur H2 correspondant à l'épaisseur du circuit imprimé 5 et porte deux ergots 89 et 90 souples présentant des épaulements 91 et 92. Le pied 89-92 est destiné à pénétrer dans le trou 73 du substrat 50 déjà décrit à la figure 6. Lors de l'introduction les deux ergots 89,90 se raccrochent et sont libérés quand les épaulements 91,92 ressortent par la face libre du substrat 50.

Du fait de la forme oblongue du trou 73 et du pied 89-92, le support est fixé au point de vue de son orientation une fois installé dans le support. De plus, il y a, lors du montage, un guidage naturel des pattes précitées des capteurs à effet Hall à travers les trous de contact correspondant du substrat 50.

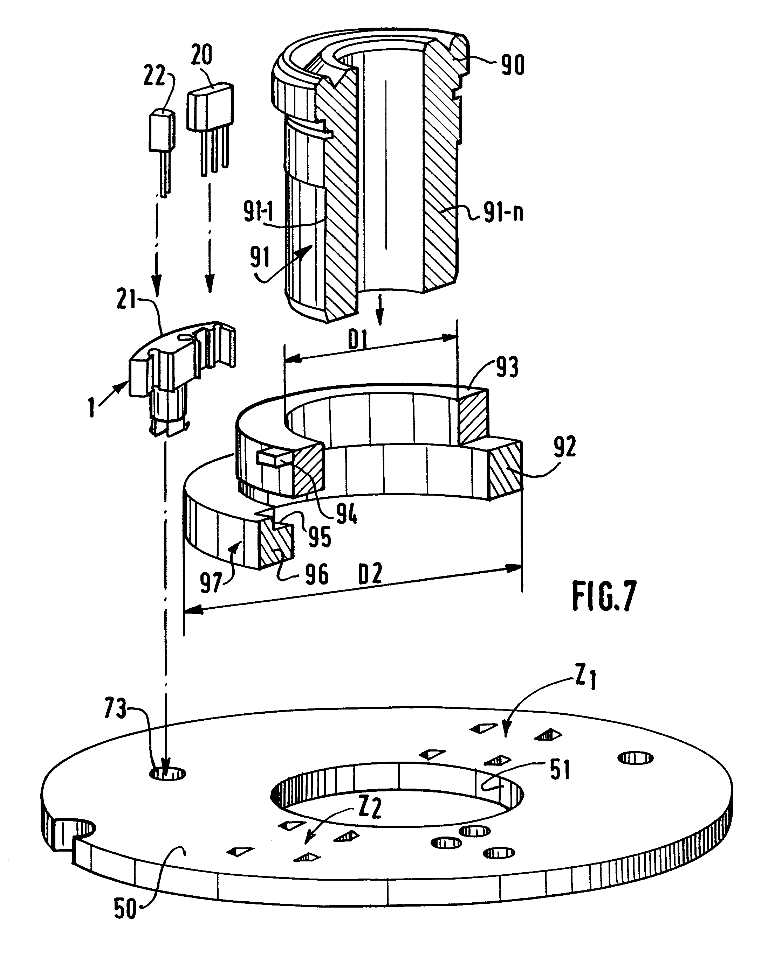

A la figure 7, on a représenté un schéma de montage plus complet. On a représenté un demi-collecteur 90 qui sera monté sur l'arbre du rotor. Les lames 91-1 à 91-n du collecteur sont sur une partie d'un premier diamètre D1 correspondant à l'alésage d'une roue multipolaire 92. La roue multipolaire comporte une première partie cylindrique 93 munie d'un ergot ou pion d'arrêt en rotation 94 destiné à venir s'engager lors du montage dans une encoche 95 d'une seconde partie cylindrique 96 de la roue multipolaire.

La roue multipolaire présente un diamètre extérieur D2 destiné à amener les zones aimantées 97 etc.. à proximité des capteurs à effet Hall 20,22 une fois ceux-ci installés dans le support 21, le support 21 est installé sur le substrat 50. Dans cette disposition, la roue multipolaire reste à la surface supérieure du substrat 50, tandis que le collecteur descend dans l'alésage 51 de façon à parvenir dans la zone Z1 ou Z2 où se situent les porte-charbons.

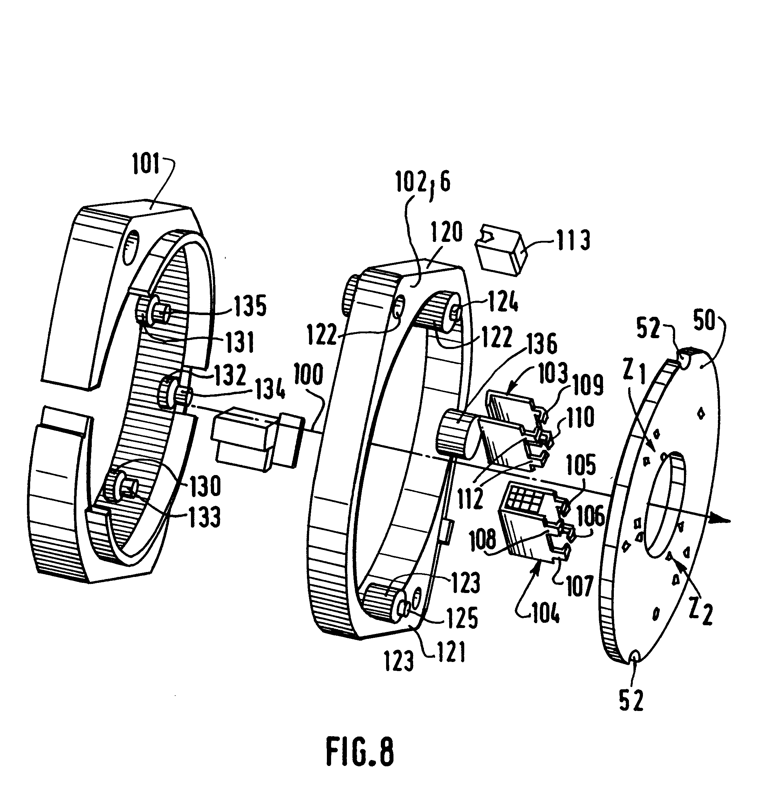

A la figure 8, on a représenté un plan de montage d'un autre mode de réalisation de l'invention. Alignés sur l'axe de rotation 100, on trouve successivement un socle de réducteur 101, une pièce intermédiaire 102, et le substrat 50 déjà décrit. Les porte-charbons respectivement 103 et 104 sont munis de languettes ou d'ergots 105,106,107 et 108 d'une part 109,110,111,112 d'autre part destinées à pénétrer dans les trous correspondants des zones Z1 et Z2 du substrat 50. On a aussi représenté un charbon 113 avant son installation dans le porte-charbons 103.

La pièce intermédiaire 6 comporte notamment deux oreilles 120 et 121 munies de perçages 122 et 123 de liaison au socle du réducteur 101. La pièce intermédiaire comporte aussi des pions de centrage 122 et 123 dont la partie supérieure comporte deux ergots 124 et 125 destinés à pénétrer dans les encoches 52 et 53 du substrat 50. De ce fait, le substrat 50 ne peut être installé que dans une position angulaire et vient en butée sur la surface de chaque pion 123 et 125 d'autre part.

La pièce intermédiaire 6 comporte des pions respectivement 130,131 et 132 dont la partie supérieure porte des ergots 133,134 et 135 destinés à pénétrer dans des logements correspondants des pions précités 122,123 d'une part et du pion 136 d'autre part installés dans l'alésage intérieur de la pièce intermédiaire 6. La pièce intermédiaire 6 est ainsi calée par rapport au socle du réducteur 101.

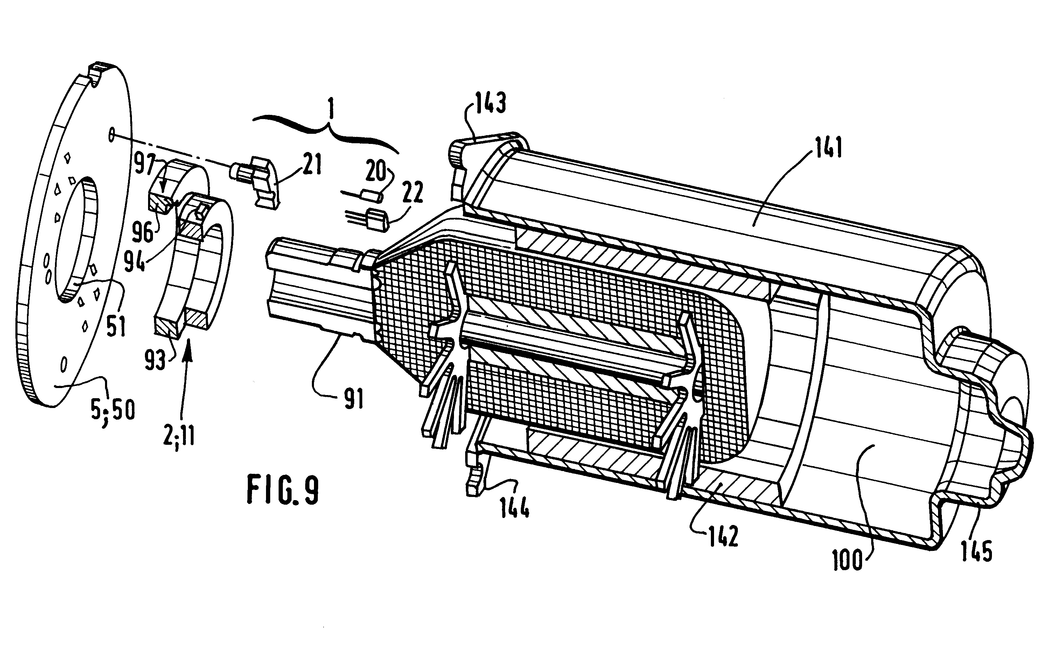

A la figure 9, on a représenté la suite de la figure 8 au moins dans un mode de réalisation de l'invention. La roue multipolaire précitée 92 est installée au-dessus du substrat 50 en symétrie sur l'axe de rotation 100.

Le rotor comportant principalement le collecteur 90 et l'induit l40 est aligné sur l'axe de rotation 100. D'autre part, une carcasse 141 de forme générale cylindrique, d'axe de rotation 100, contient des aimants permanents 142 destinés à engendrer le champ inducteur de la machine. La carcasse 141 comporte des oreilles 143,144 munies de perçages destinés à se correspondre avec les oreilles et perçages de la pièce intermédiaire 6 et du socle de réducteur 101. L'ensemble des parties précitées du moteur est ainsi monté à l'intérieur de la carcasse et l'extrémité de l'axe de rotation 100, matérialisé par un arbre de rotor (non représenté) est portée par une rotule de bout d'arbre (non représentée) et installée dans un logement 145 de la carcasse 141.

La présente invention a été décrite à l'aide d'un exemple préféré de réalisation pour un moteur à collecteur. Cependant, elle est applicable à des moteurs sans collecteur pour certains de ses aspects concernant notamment la constitution du circuit imprimé 5 et sa fixation.

De même, dans le cas où un capteur de position angulaire ou organe de lecture 1 est installé, il n'est pas nécessairement de type magnétique. Il peut notamment être de type optique. D'autre part, il n'est pas nécessaire qu'un support d'une indication de position angulaire du rotor soit spécialement ajouté. Un tel support peut être constitué directement par une partie du rotor venant en vis-à-vis dudit organe de lecture, une fois le rotor installé.

De même, l'invention s'applique aux génératrices.

## Revendications

1. Machine électrodynamique dont des enroulements sont connectés à une source d'énergie électrique ou à une charge par un câble électrique de liaison, connecté sur des zones conductrices d'un circuit imprimé support d'un circuit électrique de service (5), fixe par rapport à une carcasse (141) de la machine, caractérisée en ce que la carcasse est fermée par une pièce intermédiaire (6), en ce que le circuit électrique de service (5) est monté à l'intérieur de la pièce intermédiaire (6) dans un creux constitué par un rebord périphérique (33), tourné vers l'intérieur de la machine quand la pièce intermédiaire (6) est montée sur la carcasse.

2. Machine électrodynamique selon la revendication 1, caractérisée en ce que la pièce intermédiaire (6) porte des jambes ou cales de fixation (34, 36) du circuit imprimé sur lequel est réalisé un circuit électrique de service (5) destiné à gérer l'alimentation électrique de la machine.

3. Machine électrodynamique selon la revendication 1, du type à collecteur (7) et charbons (44,45), caractérisée en ce qu'elle comporte des éléments de fixation (40 - 43) d'étuis porte-charbons (44, 45) pratiqués sur le circuit imprimé (5, 50).

4. Machine électrodynamique selon la revendication 1, caractérisée en ce que le circuit imprimé comporte un substrat isolant (50) de forme circulaire percé d'un trou central (51) destiné à laisser passer l'arbre et le collecteur du rotor, en ce que la périphérie extérieure du substrat (50) comporte des encoches (52, 53) de guidage de la plaquette porte-charbons sur une pièce intermédiaire (6) entre la carcasse (141) et un socle d'un organe comme un réducteur (101), ces encoches étant notamment réalisées par poinçonnage circulaire avec une disposition non symétrique de façon à réaliser un détrompage lors du montage du circuit imprimé dans le moteur.

5. Machine électrodynamique selon la revendication 4, caractérisée en ce que les porte-charbons (103, 104) sont munis de languettes ou d'ergots (105 - 112) destinées à pénétrer dans les trous correspondants de zones (Z1 et Z2) du substrat (50).

6. Machine électrodynamique selon la revendication 4, caractérisée en ce que la pièce intermédiaire (6) comporte notamment deux oreilles (120, 121) munies de perçages (122, 123) de liaison au socle d'un organe comme un réducteur (101) et les oreilles (144,143) de la carcasse (141).

7. Machine électrodynamique selon l'une des revendications précédentes, caractérisée en ce que la pièce intermédiaire (6) comporte des pions de centrage (122, 123) dont la partie supérieure comporte deux ergots (124, 125) destinés à pénétrer dans les encoches (52, 53) du substrat (50), de façon à permettre l'installation du substrat (50) dans une position angulaire prédéterminée et à le faire venir en butée sur la surface de chaque pion (123, 125).

8. Machine électrodynamique selon la revendication 7, caractérisée en ce que la pièce intermédiaire (102) comporte des pions (130, 131,132) dont la partie supérieure porte des ergots (133, 134 et 135) destinés à pénétrer dans des logements correspondants des pions (122, 123, 136) installés dans l'alésage intérieur de la pièce intermédiaire (6) de façon à la caler par rapport au socle d'un organe comme un réducteur (101).

9. Machine électrodynamique selon l'une des revendications précédentes, caractérisée en ce que le circuit imprimé (5) porte un organe de lecture (1) d'une indication (9) de position angulaire du rotor (3), portée notamment par un support comme une roue (2 ; 11), l'organe de lecture (1) étant électriquement connecté au circuit électrique de service et/ou au câble de liaison (F) montés sur le circuit imprimé (5).

10. Machine électrodynamique selon la revendication 3, caractérisée en ce que la pièce intermédiaire (6) comporte au moins un dégagement ou lumière (C) à travers laquelle on a accès à au moins un porte-charbons (45), notamment à des fins de remplacement du charbon sans avoir à modifier le positionnement relatif des charbons (45) et du collecteur (7).
